# EUROPEAN PATENT SPECIFICATION

(11) **EP 4 015 796 B1**
(45) Date of publication and mention of the grant of the patent: **31.12.2025**
(21) Application number: 21208921.3
(22) Date of filing: 18.11.2021
(51) Int. Cl.: F02C 7/04, F02C 7/141, F02C 7/143, F02K 1/08, F02K 3/10, F02K 3/105, F02K 1/82, F02K 1/09, B64D 33/02, B64D 33/04

(54) **SYSTEMS AND METHODS FOR EXPANDING AN OPERATING SPEED RANGE OF A HIGH SPEED FLIGHT VEHICLE**
SYSTEME UND VERFAHREN ZUR ERWEITERUNG EINES BETRIEBSDREHZAHLBEREICHES EINES HOCHGESCHWINDIGKEITSFLUGZEUGS
SYSTÈMES ET PROCÉDÉS PERMETTANT D'ÉTENDRE LA GAMME DE VITESSE DE FONCTIONNEMENT D'UN VÉHICULE VOLANT À GRANDE VITESSE

(30) Priority: 18.12.2020 US 202063127304 P
(43) Date of publication of application: 22.06.2022
(73) Proprietor: The Boeing Company, Arlington, VA 22202 (US)
(72) Inventor: DYER, Richard S., Chicago, 60606-1596 (US); ROODE, Matthew J., Chicago, 60606-1596 (US); BOWCUTT, Kevin G., Chicago, 60606-1596 (US); FRANKLIN, Timothy H., Chicago, 60606-1596 (US); SILKEY, Joseph S., Chicago, 60606-1596 (US)
(74) Representative: Morrall, Jonathan Ian McLachlan

(56) References cited:
- EP-A1- 3 048 282
- EP-A2- 1 939 438
- EP-A2- 2 295 763
- EP-A2- 2 472 089
- EP-A2- 2 643 557
- EP-B1- 2 643 557
- GB-A- 2 582 529
- GB-A- 2 584 331
- US-A- 3 412 560
- US-A1- 2005 252 193
- US-A1- 2014 216 056
- US-A1- 2020 386 189

## Description

### Field

The present disclosure generally relates to high speed flight vehicles and, more specifically, to systems and methods for expanding operating ranges of high speed flight vehicles.

### Background

Operating conditions at high flight speeds present various challenges to flight vehicle design. For example, a gas turbine engine of a flight vehicle traveling through atmosphere at speeds greater than Mach 3, and more particularly at hypersonic speeds greater than Mach 5, may experience localized temperatures that reach or exceed a material temperature limit. In conventional flight vehicle design, the engine is throttled back as the temperature nears the material temperature limit, thereby to avoid exceeding the material temperature limit. When excessive throttling back is needed due to high temperatures, the engine no longer accelerates the flight vehicle, thereby limiting a top operating speed of the flight vehicle. Additionally, nozzle design may impose limits on the operating range of the flight vehicle. For example, a nozzle configured for speeds greater than Mach 3 may induce over-expansion drag at lower speeds, or may otherwise fail to provide propulsive efficiency across a range of operating speeds of the flight vehicle.

US 2020/386189A1 describes, according to its abstract, a hypersonic propulsion engine including: a turbine engine including a compressor section, a combustion section, and a turbine section arranged in serial flow order, the turbine engine defining a turbine engine inlet upstream of the compressor section and a turbine engine exhaust downstream of the turbine section; a ducting assembly defining a bypass duct having a substantially annular shape and extending around the turbine engine, an afterburning chamber located downstream of the bypass duct and at least partially aft of the turbine engine exhaust, and an inlet section located at least partially forward of the bypass duct and the turbine engine inlet; and an inlet precooler positioned at least partially within the inlet section of the ducting assembly and upstream of the turbine engine inlet, the bypass duct, or both for cooling an airflow provided through the inlet section of the ducting assembly to the turbine engine inlet, the bypass duct, or both.

GB 2 584 331 A describes, according to its abstract, an engine 101 comprising an air intake arrangement 102 configured to receive air; a heat exchanger arrangement 103 arranged downstream of the air intake arrangement, configured to cool the air, and one or more turbomachinery components 104 configured to receive cooled air from the heat exchanger arrangement. The heat exchanger arrangement may comprise a plurality of heat exchanger modules which may be arranged to be generally centered on and to be arranged along a longitudinal axis of the engine. At least one of the heat exchanger modules may be arranged to at least partially overlap with at least one other one of the heat exchanger modules relative to the longitudinal axis of the engine. The heat exchanger arrangement may be at least partially substantially conical in shape. Also described is an engine with a heat exchanger which has a mode of operation in which it heats the engine fuel and a mode of operation in which is cools the engine fuel.

GB 2 582 529 A describes, according to its abstract, a gas turbine engine with an afterburner 17 induced in the bypass duct 4 of the engine to combust bypass air 28, and where a bypass fan 3 can be disengaged from the engine's core shaft 16, and retracted into a cylinder, where the engine also comprises a shock deflector needle 1, attached to the hub 22 of the engine. When accelerating from subsonic to supersonic speeds, the bypass fan is retracted, allowing the engine to operate as a hybrid ramjet/turbojet engine. When decelerating from supersonic speeds to subsonic, the bypass fan can be again extended to return to normal turbojet operation.

EP 2 295 763 A2 describes, according to its abstract, a gas turbine engine comprising a fan drive gear system, a low spool connected to the fan drive gear system, and a high spool disposed aft of the low spool. The low spool comprises a rearward-flow low pressure compressor disposed aft of the fan drive gear system, and a forward-flow low pressure turbine disposed aft of the low pressure compressor. The high spool comprises a forward-flow high pressure turbine disposed aft of the low pressure turbine, a combustor disposed aft of the high pressure turbine, and a forward-flow high pressure compressor disposed aft of the combustor.

US 2005/252193 A1 describes, according to its abstract, a system and method for cooling at least a portion of an engine. The engine is cooled using a fuel, such as a high heat sink fuel, that is subsequently used for combustion in the engine. The fuel can be used to cool one or more of the gases and/or components in the engine, thereby cooling the engine including an exhaust nozzle. For example, the fuel can be circulated through one or more heat exchanging devices that are disposed inside or outside a passage of the engine, and the fuel can absorb thermal energy from the engine or air that flows in the engine passage. In any case, the cooling of the engine can result in a reduction to the infrared signature of the engine.

EP 2 643 557 A2 describes, according to its abstract, one or more heat exchangers mounted in a duct having heat transfer cooling passages therein and a variable geometry flow restrictor integral with each of the heat exchangers. An annular slide valve axially translatable within the duct is operable to open and close or vary a variable area between the heat exchangers and one of inner and outer casings bounding the duct. The heat exchangers may be being circumferentially distributed around an annular duct and include radial or circumferentially curved heat transfer tubes or vanes.

US 2014/216056 A1 describes, according to its abstract, a heat exchange module for a turbine engine. The heat exchange module includes a duct and a plurality of heat exchangers. The duct includes a flowpath defined radially between a plurality of concentric duct walls. The flowpath extends along an axial centerline through the duct between a first duct end and a second duct end. The heat exchangers are located within the flowpath, and arranged circumferentially around the centerline.

EP 3 048 282 A1 describes, according to its abstract, a blocker door assembly which may be for a cooling system that may be applied to a gas turbine engine including a plurality of blocker doors circumferentially spaced about an engine axis. Each blocker door is constructed and arranged to move in a circumferential direction to, at least in-part, control air flow through a passage in an adjacent fixture. A sync-ring is concentrically located about the engine axis, disposed in an annular first duct in direct communication with each passage, and engaged to each one of the plurality of blocker doors for simultaneous operation. The sync-ring is aero-dynamically shaped to reduce surrounding airflow resistance.

EP 1 939 438 A2 describes, according to its abstract, a gas turbine engine including a turbomachinery core operable to generating a first flow of pressurized combustion gases, the core having an exit plane; a fan disposed upstream of the core adapted to extract energy from the core and generate a first flow of pressurized air; a bypass duct surrounding the core which receives a portion of the flow of pressurized air from the fan; a duct burner disposed in the bypass duct, upstream of the exit plane, for receiving the first flow of pressurized air and generating a second flow of pressurized combustion gases; and an exhaust duct disposed downstream of the core and operable to receive and the first and second flows of pressurized combustion gases and to discharge the combined flows downstream.

EP 2 472 089 A2 describes, according to its abstract, an aircraft gas turbine engine having a row of FLADE fan blades disposed radially outwardly of and drivingly connected to a fan in the engine's fan section. The FLADE fan blades extend across a FLADE duct circumscribing the fan section. A two dimensional air discharge passage is in fluid flow communication with the FLADE duct and with FLADE air upstream and downstream discharge slots in a divergent flap of a two dimensional exhaust nozzle. A valve fully closes the upstream slot when the downstream slot is fully opened and fully opens the upstream slot when the downstream slot is fully closed. The upstream and downstream slots may be located upstream and downstream respectfully of a nozzle discharge area in the nozzle. A sliding deck slides aft or down to open upstream slot and close downstream slot and slides forward or up to close upstream slot and open downstream slot.

US 3 412 560 A describes, according to its abstract, a jet propulsion engine having a fuel cooled combustion chamber with a chamber outlet nozzle also fuel-cooled. The combustion chamber discharges into a fuel-cooled convergent-divergent jet propulsion nozzle which has an air entry around the combustion chamber. Means are provided for variably admitting ambient boundary layer air into the jet propulsion nozzle. Fuel for combustion is also heated in a heat exchanger disposed between a pre-combustion chamber, in which some fuel is burned, and the main combustion chamber.

### Summary

In accordance with one aspect of the present disclosure, a turbine engine for a high speed flight vehicle according to claim 1 is provided.

In accordance with a further aspect of the present disclosure, a method of providing thrust to a flight vehicle having an engine and an airframe according to claim 11 is provided.

The features, functions, and advantages that have been discussed can be achieved independently in various examples or may be combined in yet other examples further details of which can be seen with reference to the following description and drawings.

### Brief Description of the Drawings

The novel features believed characteristic of the illustrative examples are set forth in the appended claims. The illustrative examples, however, as well as a preferred mode of use, further objectives and advantages thereof, will best be understood by reference to the following detailed description of illustrative examples of the present disclosure when read in conjunction with the accompanying drawings, wherein:
FIG. 1 is a perspective view of a high speed flight vehicle having an integrated cooling and power generation system according to the present disclosure.
FIG. 2 is a schematic illustration of a turbine engine with air cooling across an entire air flow.
FIG. 3 is a schematic illustration of a turbine engine with air cooling across a core air flow.
FIG. 4 is a schematic illustration of an alternative example of a turbine engine with air cooling across a core air flow.
FIG. 5 is a schematic illustration of a further example of a turbine engine with air cooling across a core air flow.
FIG. 6 is a schematic illustration of a turbine engine with spot cooling in an engine core and afterburner liner.
FIG. 7 is a perspective view of a tail portion of the high speed flight vehicle of FIG. 1.
FIG. 8 is a side elevation view, in partial cross section, of the tail portion of the high speed flight vehicle of FIG. 7, with a cowl and a primary thrust surface in first positions relative to each other.
FIG. 9 is a side elevation view, in partial cross-section, of the tail portion of the high speed flight vehicle of FIG. 7, with the cowl and primary thrust surface in second positions relative to each other.
FIG. 10 is a side elevation view of the tail portion of the high speed flight vehicle of FIG. 7, showing a primary thrust surface that translates parallel to a longitudinal axis of the flight vehicle.
FIG. 11 is a side elevation view of the tail portion of the high speed flight vehicle of FIG. 7, showing a primary thrust surface that translates in a direction perpendicular to a longitudinal axis of the flight vehicle.
FIG. 12 is a side elevation view of the tail portion of the high speed flight vehicle of FIG. 7, showing a primary thrust surface that rotates relative to an airframe of the flight vehicle.
FIG. 13 is a side elevation view of the tail portion of the high speed flight vehicle of FIG. 7, showing a primary thrust surface that translates in a direction that is at an angle relative to the longitudinal axis of the flight vehicle.
FIG. 14 is a schematic end view diagram of a first example of a shape of a thrust surface.
FIG. 15 is a schematic end view diagram of a second example of a shape of a thrust surface.
FIG. 16 is a schematic end view diagram of a third example of a shape of a thrust surface.
FIG. 17 is schematic side view diagram of a first example of a thrust surface longitudinal profile.
FIG. 18 is schematic side view diagram of a second example of a thrust surface longitudinal profile.
FIG. 19 is schematic side view diagram of a third example of a thrust surface longitudinal profile.
FIG. 20 is a side elevation view, in partial cross-section, of the tail portion of the high speed flight vehicle of FIG. 7, showing a first example of a nozzle cooling system.
FIG. 21 is a side elevation view, in partial cross-section, of the tail portion of the high speed flight vehicle of FIG. 7, showing a second example of a nozzle cooling system.
FIGS. 22-24 are schematic plan view diagrams showing examples of perforation profiles formed in a plug wall of the nozzle assembly.
FIG. 25 is a side elevation view, in partial cross-section, of the tail portion of the high speed flight vehicle of FIG. 7, showing a low flow rate of coolant to the nozzle assembly.
FIG. 26 is a side elevation view, in partial cross-section, of the tail portion of the high speed flight vehicle of FIG. 7, showing a high flow rate of coolant to the nozzle assembly.

### Detailed Description

It will be appreciated that those skilled in the art will be able to devise various arrangements that, although not explicitly described or shown herein, embody the principles of the examples and are included within the scope of the examples. As a result, the inventive concept(s) is not limited to the specific examples described below, but by the claims.

Examples of a turbine engine for a high speed flight vehicle described herein provide cooling to permit operation of the flight vehicle at higher speeds. A heat exchanger is used to cool air passing through an inlet duct, a core housing, specific components of an engine core, and/or a liner of the duct adjacent an afterburner, thereby preventing the temperature of the components from reaching thermal limits. As a result, the turbine engine may continue operation without throttle reduction, thereby increasing the upper end of the range at which the flight vehicle travels.

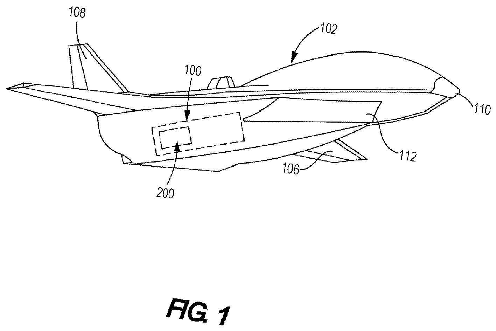

FIG. 1 illustrates an example of a high speed flight vehicle 102. The flight vehicle 102 may be operated piloted or unpiloted, as desired. The flight vehicle 102 is just one configuration of a flight vehicle capable of traveling at a speed of at least Mach 3, and other configurations, not shown, may be implemented as desired. For example, the flight vehicle 102 may have a different shape, size, aspect ratio, etc., as desired. Thus, the flight vehicle 102 is merely shown in a particular configuration for purposes of discussion.

In this example, the flight vehicle 102 includes a turbine engine 100, a wing 106, a tail 108, and a nose cap 110. The turbine engine 100 is the primary source of propulsion for the flight vehicle 102. During operation of the flight vehicle 102 above Mach 3, or in hypersonic flight (e.g., the flight vehicle 102 moves at hypersonic speeds of Mach 5 and above), the embodiments described herein prevent portions of the turbine engine 100 from being heated to temperatures that are near or exceed thermal limits for the materials used in the turbine engine 100.

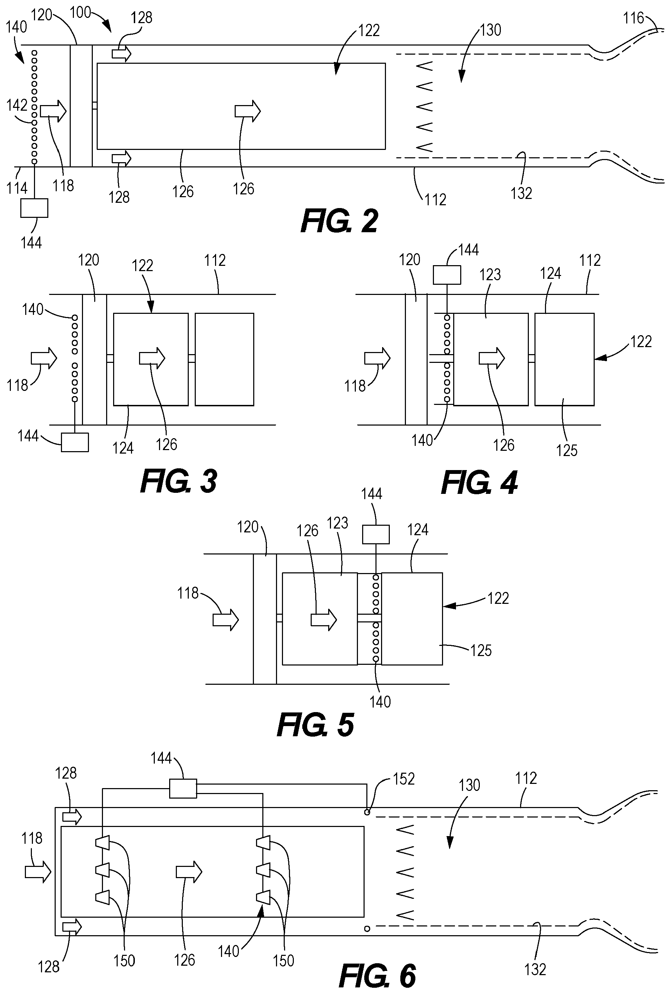

In the examples illustrated at FIGS. 2-6, the airflow and/or specific components or areas of the turbine engine 100 are cooled to reduced temperatures below the thermal limit, thereby permitting the flight vehicle 102 to operate at higher speeds. The turbine engine 100 illustrated at FIG. 2, for example, includes an inlet air duct 112 having an upstream end 114 for receiving ambient air and a downstream end 116. The inlet air duct 112 directs a duct air flow 118 from the upstream end 114 to the downstream end 116. As used herein, the duct air flow 118 includes air that flows across an entire cross-sectional area of the inlet air duct 112. The turbine engine 100 includes a fan 120, which is disposed in the inlet air duct 112 and draws air into the inlet air duct 112.

The turbine engine 100 further includes an engine core 122 for producing propulsion from jet core efflux. The engine core 122 is disposed in a center portion of the inlet air duct 112, is operably coupled to the fan 120, and is located downstream of the fan 120. The engine core 122 includes a core housing 124, which divides the duct air flow 118 into a core air flow 126, which passes through the core housing 124, and a bypass air flow 128, which passes around the core housing 124. An afterburner 130 is disposed in the inlet air duct 112 and downstream of the engine core 122 to selectively provide additional thrust to the flight vehicle 102. A portion of the inlet air duct 112 surrounding and downstream of the afterburner 130 includes an afterburner liner 132 for thermal protection of a downstream end of the inlet air duct 112.

The turbine engine 100 includes cooling to mitigate high temperatures associated with operation of the flight vehicle 102. In the example illustrated at FIGS. 2-6, a heat exchanger 140 is used to provide cooling. The heat exchanger 140 includes one or more conduits 142 that are in fluidic communication with a heat sink fluid source 144. Heat sink fluid passing through the conduit(s) 142 absorbs heat from the environment surrounding the conduit(s), thereby reducing temperature. The heat sink fluid source 144 may be an ancillary source of fluid on the flight vehicle 102, a dedicated thermal management system, a power generation system, or a sub-system that requires heat for operation, or any combination thereof. For example, the heat sink fluid may be fuel, water, air, or any other fluid used on or available to the flight vehicle. In some examples, the heat sink fluid may be a supercritical fluid, such as supercritical carbon dioxide, which provides efficient heat transfer while reducing the size and weight of components used in the heat exchanger 140.

The heat exchanger 140 may be located in different positions within the turbine engine 100, and/or may be provided in different sizes, to provide the desired cooling effect. In FIG. 2, for example, the heat exchanger 140 is positioned upstream of the fan 120. Additionally, the heat exchanger 140 is configured to absorb heat from an entirety of the duct air flow 118. Accordingly, as shown in FIG. 2, the heat exchanger 140 extends across an entire cross-section of the inlet air duct 112, thereby reducing temperature across the entire duct air flow 118. Locating the heat exchanger 140 upstream of the fan 120 exposes the heat exchanger to lower temperatures and pressures than those present further downstream, reducing material and other design considerations for the heat exchanger 140. This location of the heat exchanger 140 also provides cooling prior to compression of the air flow, thereby increasing the thermodynamic advantage effected by the heat exchanger 140.

FIGS. 3-5 illustrates examples in which the heat exchanger 140 cools only a portion of the duct air flow 118. In the example of FIG. 3, the heat exchanger 140 is positioned upstream of the fan, similar to the above example. Unlike in the example illustrated in FIG. 2, however, the heat exchanger 140 shown in FIG. 3 extends across only a central portion of the inlet air duct 112. Specifically, the heat exchanger 140 is positions and sized to extend across an area that corresponds to a cross-sectional area of the core housing 124. Consequently, the heat exchanger 140 extracts heat primarily from a portion of the duct air flow 118 that ultimately will pass through the engine core 122 as the core air flow 126. In this example, the heat exchanger 140 is still located upstream of the fan 120, thereby offering the same heat exchanger design considerations and thermodynamic advantage as the previous example. By covering a smaller area, however, the weight of the heat exchanger 140 is reduced while still cooling the portion of the duct air flow 118 that will see the greatest temperature increase further downstream.

FIG. 4 illustrates an alternative example in which the heat exchanger 140 is positioned between the fan 120 and the engine core 122. In this example, the engine core 122 includes a low pressure compressor 123 and a high pressure compressor 125. The heat exchanger 140 is disposed within the core housing 124 and upstream of the low pressure compressor 123, and therefore is configured to absorb heat only from the core air flow 126. The temperature and density of air at this location is greater than upstream of the fan 120 which permits the heat exchanger 140 to be more compact, thereby reducing the weight of the heat exchanger. The thermodynamic advantage of cooling at this location, however, will be reduced, and positioning the heat exchanger 140 between the fan 120 and the low pressure compressor 123 may require the shaft connecting these components to be lengthened, thereby potentially impacting turbomachinery design.

FIG. 5 illustrates a further example in which the heat exchanger 140 is disposed in the core housing 124, and therefore is configured to absorb heat only from the core air flow 126 portion of the duct air flow 118. In this example, the heat exchanger 140 is located between the low pressure compressor 123 and the high pressure compressor 125. At this location, the temperature and density of the air is even greater than the heat exchanger location shown in FIG. 4, thereby allowing the heat exchanger to be even more compact and therefore have less weight. The thermodynamic advantage of cooling at this location, however, is further reduced, and again may require the shaft to be lengthened, thereby impacting turbomachinery design.

FIG. 6 illustrates examples of targeted cooling of specific locations of the turbine engine 100. The heat exchanger 140 of FIG. 6 includes one or more spot-cooling heat exchangers 150. Each spot-cooling heat exchanger 150 is in fluidic communication with the heat sink fluid source 144, and is configured to cool temperature sensitive areas or components of the turbine engine 100. For example, the spot-cooling heat exchanger 150 may be positioned to cool actuators, sensors, controllers, pumps, lubrication systems, or other accessories having more limited operating temperatures than the rest of the turbine engine 100.

Additionally, FIG. 6 illustrates targeted cooling at and downstream of the afterburner 130. When traveling at higher speeds, such as above Mach 3, the bypass air flow 128 reaches higher temperatures, thereby reducing the cooling capacity of the bypass air flow 128 to cool structure and components located downstream of the engine core 122. The afterburner liner 132 in particular is susceptible to temperatures levels that exceed thermal limits. FIG. 6 illustrates a liner cooler 152 configured to cool the afterburner liner 132. The liner cooler 152 is positioned upstream of and in longitudinal alignment with the afterburner liner 132. The liner cooler 152 is in fluidic communication with the heat sink fluid source 144, thereby absorbing heat from the bypass air flow 128. In the illustrated embodiment, the liner cooler 152 is located adjacent an interior surface of the inlet air duct 112, and therefore has a generally annular shape.

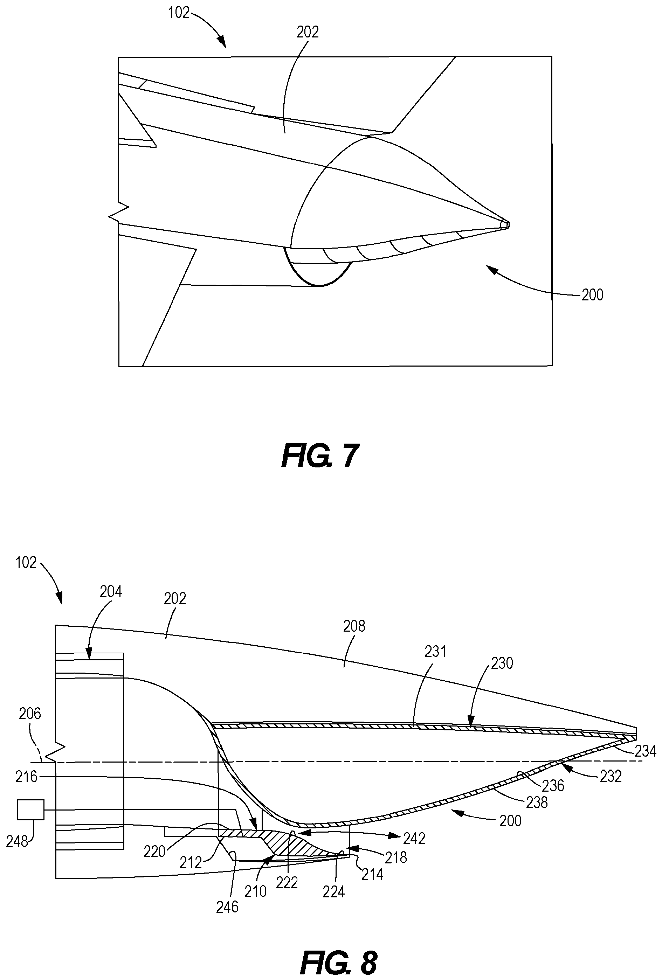

In additional examples illustrated in FIGS. 7-26, the flight vehicle 102 includes a nozzle assembly 200 that is configured to expand the operating speed range of the flight vehicle 102. The nozzle assembly 200 includes an expansion surface that permits greater support strength and interfacing with sub-systems and/or other components provided on the flight vehicle 102, the ability to adjust the shape and size of a nozzle orifice to maximize propulsive efficiency across a range of operating speeds, and a nozzle cooling system that reduces temperature at the nozzle while also influencing exhaust plume shape and resulting thrust generated by the propulsion system.

As best shown in FIGS. 7-9, the nozzle assembly 200 is shown coupled to an airframe 202 of the flight vehicle 102. The flight vehicle 102 includes an engine 204, and the nozzle assembly 200 is disposed downstream of and in fluid communication with the engine 204. The engine 204 may be embodied as the turbine engine 100 shown in Figures 1-6. The nozzle assembly 200 includes a cowl 210 having a cowl neck 212 at an upstream end and a cowl outlet 214 at a downstream end. The cowl 210 further includes a cowl internal surface 216 which defines a cowl orifice 218. In the examples disclosed herein, the cowl 210 has an arcuate shape. That is, when viewed along a longitudinal axis 206 of the flight vehicle 102, the cowl 210 extends partially around the longitudinal axis 206. As used herein, the term "arcuate shape" means that the overall profile of the cowl 210 extends around an axis, and is intended to cover cowls that have curvilinear sections, rectilinear sections, or combinations thereof. The cowl internal surface 216 includes a cowl surface inlet section 220, a cowl surface transition section 222, and a cowl surface outlet section 224. The cowl surface inlet section 220 has a first radius R1 and the cowl surface outlet section 224 has a second radius R2, which is greater than the first radius R1. The cowl surface transition section 222 has a radius that gradually increases, at a constant or variable rate, from the first radius R1 to the second radius R2.

With continued reference to FIGS. 7-9, the nozzle assembly 200 further includes a plug 230, which defines a primary thrust surface 232 for the flight vehicle 102. The plug 230 is supported from the airframe 202 in cantilevered fashion. That is, the airframe 202 includes a tail section 208 at a rear of the flight vehicle 102, and the plug 230 includes a plug base 231 that is coupled to and depends from the tail section 208 of the airframe 202. In the illustrated examples, the plug base 231 extends around a periphery of the primary thrust surface 232 to permit secure attachment of the plug 230 to the airframe 202, while permitting operable coupling of the plug 230 to other systems and components provided on the flight vehicle 102. The plug 230 includes a plug wall 234 having a plug wall interior surface 236 and a plug wall exterior surface 238. The plug wall exterior surface 238 defines the primary thrust surface 232.

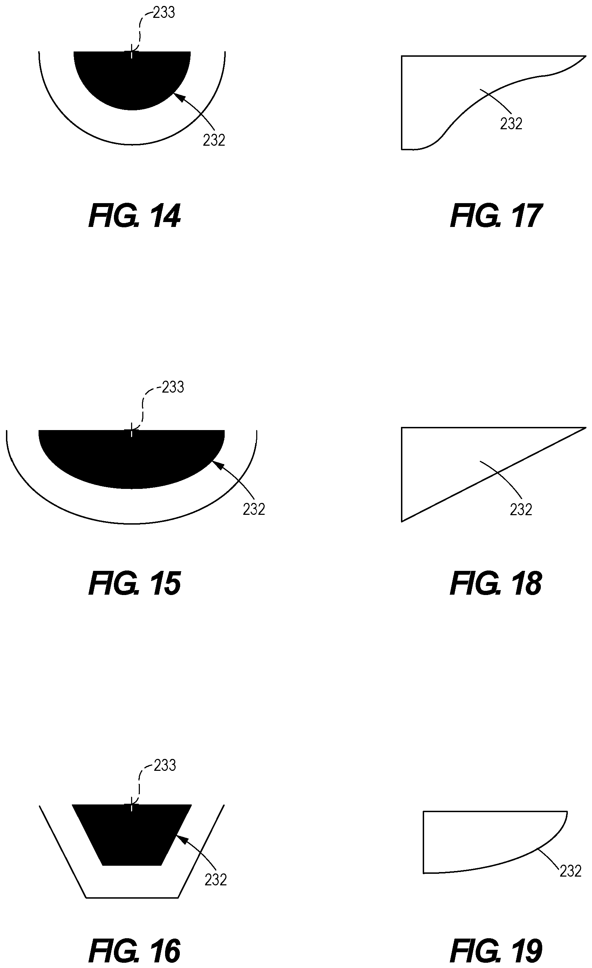

As shown in FIGS. 7-9 and 14-15, the thrust surface 232 is partially axi-symmetric. That is, when viewed from a downstream end of the plug 230, the thrust surface 232 is symmetrical at least partially about a longitudinal axis 233 of the plug 230. FIGS. 14 and 15 show examples of the thrust surface 232 having partial ellipsoid shapes. FIG. 16 illustrates a thrust surface 232 having a partial prism shape. Additionally, the longitudinal profile of the thrust surface 232 may be provided in different shapes to optimize thrust for a particular speed of the flight vehicle 102. In FIG. 17, the longitudinal profile of the thrust surface 232 is concave, which is advantageous for high speeds, such as hypersonic speeds. In FIG. 19, the longitudinal profile of the thrust surface 232 is convex, which is advantageous for subsonic and transonic speeds. FIG. 18 illustrates a longitudinal profiles of the thrust surface 232 that is linear, which is advantageous for speeds between subsonic/transonic and hypersonic speeds.

The plug 230 is positioned relative to the cowl 210 so that a portion of the primary thrust surface 232 is disposed within the cowl orifice 218. The primary thrust surface 232 and the cowl internal surface 216 are spaced to define therebetween a throat 242. The area of the throat 242, as well as the shapes of the primary thrust surface 232 and cowl internal surface 216, influence the direction and magnitude of thrust produced by the nozzle assembly 200.

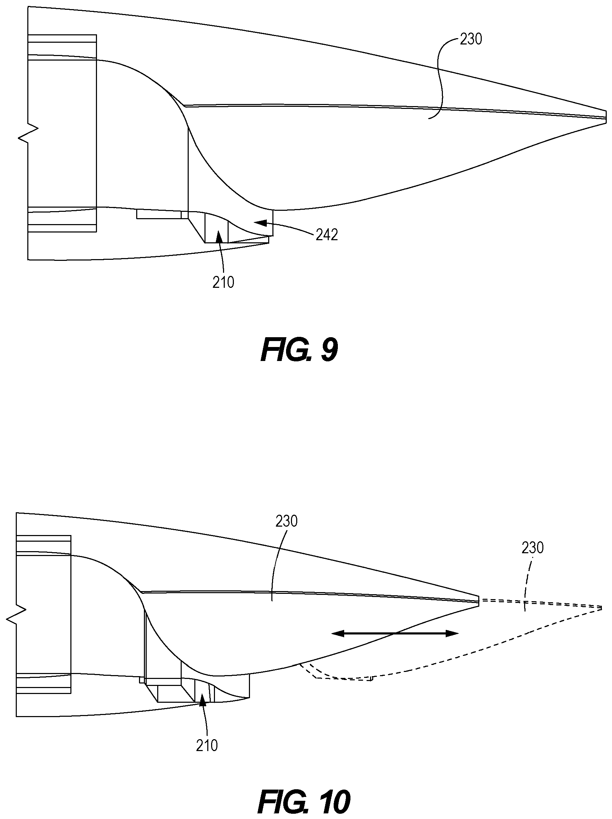

The cowl 210 and plug 230 are movable relative to each other, thereby to optimize thrust for a given speed of the flight vehicle 102. In the embodiment shown in FIGS. 7-9, the plug 230 is stationary while the cowl 210 is supported to translate in a direction parallel to the longitudinal axis 206 of the flight vehicle 102. More specifically, the cowl neck 212 is sized to be received in a slot 246 defined by the airframe 202. A cowl actuator 248 is operably coupled to the cowl 210 and configured to move the cowl 210 between a rearward position (FIG. 8) and a forward position (FIG. 9).

Relative movement between the cowl 210 and the plug 230 will change the thrust characteristics produced by the nozzle assembly 200. For example, regions of the cowl 210 and plug 230 that are nearest each other will form the throat 242. These regions will change as the cowl 210 and plug 230 move relative to each other. Accordingly, the respective contours of the cowl 210 and plug 230 will influence the size, location, angle, and cross-sectional area of the throat 242, thereby impacting thrust characteristics. For example, the cross-sectional area of the throat 242 is a primary control for the propulsion system. Throat location and angle also affect flow for the rest of the nozzle assembly 200, thereby affecting thrust efficiency. Still further, in some examples the contours of the cowl 210 and plug 230 influence the location of the throat 242, which affects the amount of internal expansion of the nozzle assembly 200. Control over the amount of internal expansion is a design factor used to produce high nozzle efficiency over a broad range of Mach numbers. For example, low internal expansion is advantageous subsonic and transonic flight speeds, while high internal expansion is advantageous for supersonic and hypersonic speeds. Accordingly, the ability to produce relative movement between the cowl 210 and the plug 230 allows the nozzle assembly 200 to optimize throat size, location, angle, and cross-sectional area for a particular flight speed, thereby expanding the speed range of the flight vehicle 102.

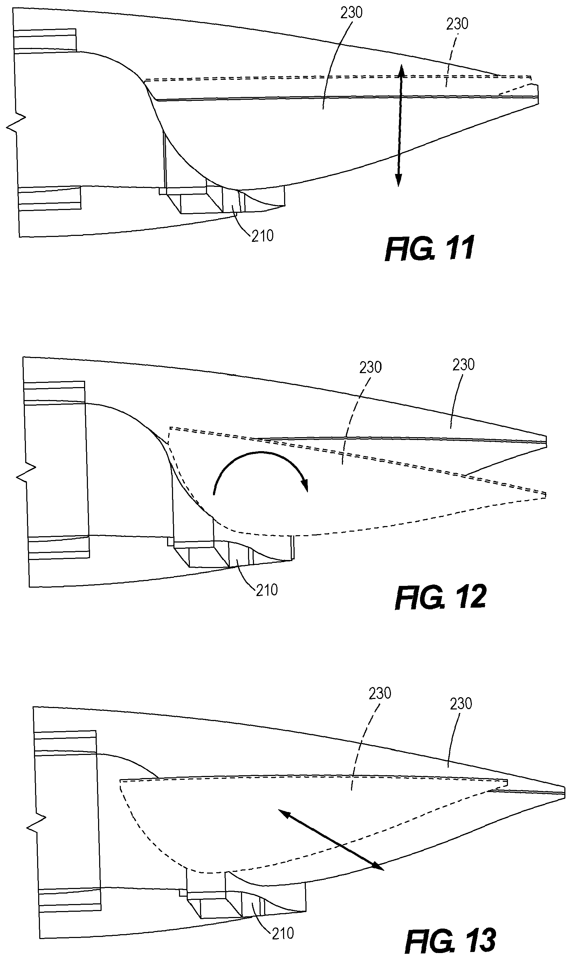

While the examples of FIGS. 7-9 show a stationary plug 230 and a movable cowl 210 that can translate in a direction parallel to the longitudinal axis 206, in other examples the cowl 210 is stationary and the plug 230 is movable, as shown in FIG. 10. Still further, both the cowl 210 and plug 230 may be movable. Additionally or alternatively, the cowl 210 and/or plug 230 may execute motions other than translation in a direction parallel to the longitudinal axis 206 to achieve relative movement of the cowl 210 and plug 230. FIG. 11 illustrates a plug 230 that is movable in a direction that is perpendicular to the longitudinal axis 206, while the cowl 210 is stationary. FIG. 12 illustrates a plug 230 that is rotatable relative to a stationary cowl 210. FIG. 13 illustrates a plug 230 that translates in a direction that is at an angle relative to the longitudinal axis 206.

In some examples, the nozzle assembly 200 includes a nozzle cooling system 250 that primarily reduces temperature at the nozzle assembly 200. Additionally, some examples of the nozzle cooling system 250 also influence a shape of the exhaust plume, thereby altering characteristics of the thrust generated by the nozzle assembly 200.

More specifically, the nozzle cooling system 250 includes a coolant source 252 that is thermally coupled to the primary thrust surface 232. The coolant source 252 may be ambient or bypass air, fluid from a thermal management system provided on the flight vehicle 102, or fluid from any other sub-system provided on the flight vehicle. For example, the coolant may be fuel, water, air, or any other fluid used on or available to the flight vehicle. In some examples, the coolant may be a supercritical fluid, such as supercritical carbon dioxide.

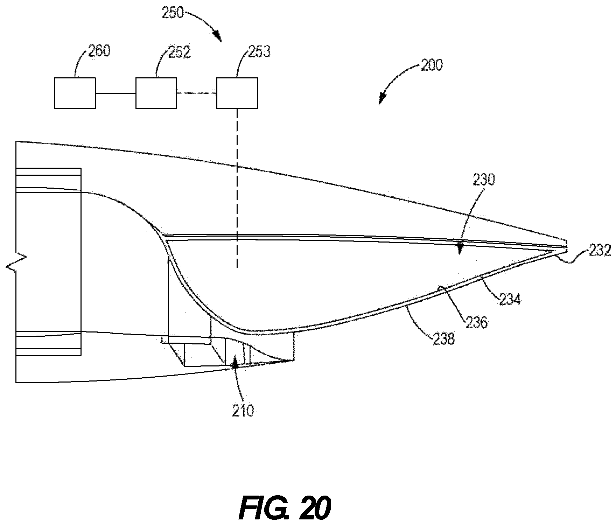

In the example shown in FIG. 20, coolant from the coolant source 252 is contained within the plug 230. In this example, the plug wall 234 is impervious, and the coolant source 252 is in fluidic communication with the plug wall interior surface 236. A coolant regulator 253, such as a pump or valve, controls flow of coolant from the coolant source 252 to the plug 230. As coolant flows to the plug 230, it cools the plug wall interior surface 236, which in turn cools the plug wall exterior surface 238 via conduction. Heated coolant can be recycled by to the coolant source 252 or other destination, or discharged from the flight vehicle 102.

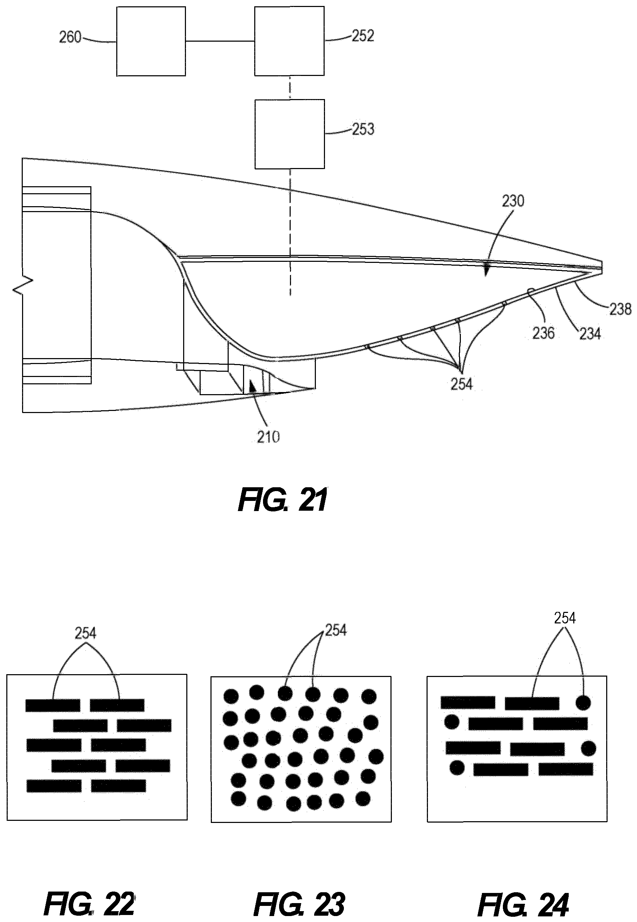

In the examples illustrated in FIGS. 21-24, coolant from the coolant source 252 passes through the plug wall 234 to directly cool the plug wall exterior surface 238. In these examples, the plug wall 234 includes perforations 254 extending from the plug wall interior surface 236 to the plug wall exterior surface 238. The perforations 254 may be provided in a variety of profile shapes and distribution patterns, which will effect the amount and location of cooling and the coolant flow rate. For example, if plug materials are used that are rated for sufficiently high temperatures, and/or engine exhaust flows are sufficiently cool, fewer perforations, smaller sized perforations, and/or a lower coolant flow rate may be used, reducing a weight of the nozzle cooling system 250. FIG. 22 illustrates perforations 254 having rectilinear profiles, while FIG. 23 illustrates perforations 254 having curvilinear profiles. **In** FIG. 24, the perforations 254 have both rectilinear and curvilinear profiles. Without wishing to be bound by theory, perforations 254 having curvilinear profiles may better align coolant flow to the plug wall exterior surface 238. The coolant regulator 253 selectively controls flow of coolant from the coolant source 252 to the plug wall interior surface 236. From the plug wall interior surface 236, coolant flows through the perforations 254 to form a film on the plug wall exterior surface 238. The coolant absorbs heat from both the plug wall exterior surface 238 and the exhaust gas, and may be discharged from the tail of the flight vehicle 102.

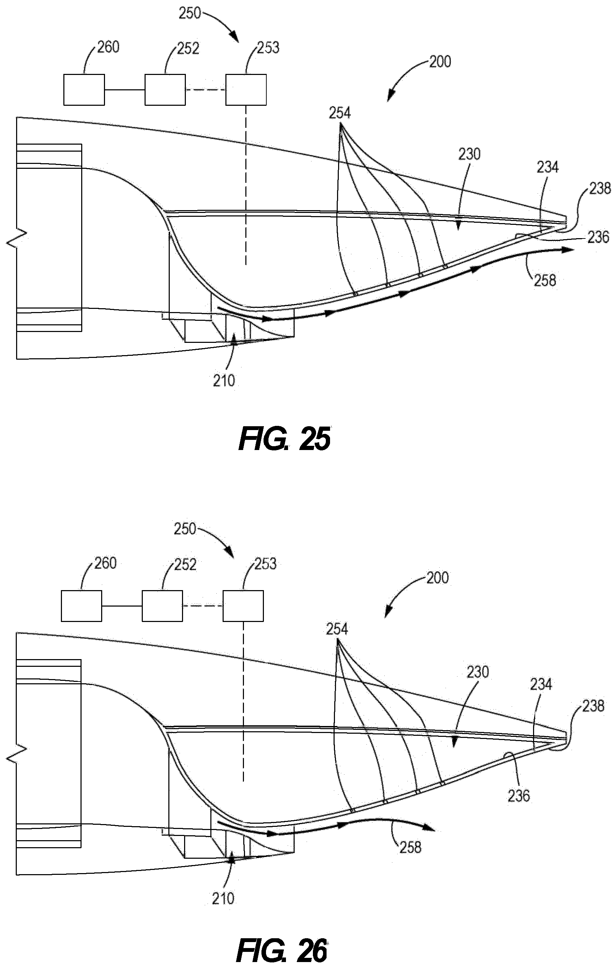

FIGS. 25 and 26 illustrate how the flow rate of the coolant can be adjusted to change thrust characteristics. **In** FIG. 25, the coolant flow rate is low, which results in exhaust gas 258 remaining in contact with the primary thrust surface 232 for a longer period and prevents overexpansion of exhaust gas 258, which is advantageous during lower operating speeds of the flight vehicle 102. FIG. 26 illustrates a coolant rate that is high, which is advantageous during higher operating speeds of the flight vehicle 102. More specifically, during high speed operation, the coolant primarily provides cooling to the nozzle assembly 200, as overexpansion of the exhaust gas 258 is of less concern.

**In** the illustrated examples, a controller 260 is provided to control operation of the nozzle assembly 200. For example, the controller 260 is operably coupled to the coolant regulator 253 to control the coolant flow rate as desired. While the specific hardware implementation of the controller 260 is subject to design choices, one particular example includes one or more processors coupled with a current driver. The one or more processors may include any electronic circuits and/or optical circuits that are able to perform the functions described herein. For example, the processor(s) may perform any functionality described herein for controller 260. The processor(s) may include one or more Central Processing Units (CPU), microprocessors, Digital Signal Processors (DSPs), Application-specific Integrated Circuits (ASICs), Programmable Logic Devices (PLD), control circuitry, etc. Some examples of processors include INTEL^{®} CORE^{™} processors, Advanced Reduced Instruction Set Computing (RISC) Machines (ARM^{®}) processors, etc.

Any of the various elements shown in the figures or described herein may be implemented as hardware, software, firmware, or some combination of these. For example, an element may be implemented as dedicated hardware. Dedicated hardware elements may be referred to as "processors", "controllers", or some similar terminology. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, a network processor, application specific integrated circuit (ASIC) or other circuitry, field programmable gate array (FPGA), read only memory (ROM) for storing software, random access memory (RAM), non-volatile storage, logic, or some other physical hardware component or module.

Also, an element may be implemented as instructions executable by a processor or a computer to perform the functions of the element. Some examples of instructions are software, program code, and firmware. The instructions are operational when executed by the processor to direct the processor to perform the functions of the element. The instructions may be stored on storage devices that are readable by the processor. Some examples of the storage devices are digital or solid-state memories, magnetic storage media such as a magnetic disks and magnetic tapes, hard drives, or optically readable digital data storage media.

## Claims

1. A turbine engine (100) for a high speed flight vehicle (102), the turbine engine (100) comprising:
an inlet air duct (112) having an upstream end (114) for receiving ambient air and a downstream end (116), the inlet air duct (112) directing a duct air flow (118) from the upstream end (114) to the downstream end (116);
a fan (120) disposed in the inlet air duct (112);
an engine core (122) disposed in the inlet air duct (112) and operably coupled to the fan (120), the engine core (122) being disposed downstream of the fan (120) and including a core housing (124), through which passes a core air flow portion (126) of the duct air flow (118);
an afterburner (130) disposed in the inlet air duct (112) and downstream of the engine core (122); and
a heat exchanger (140) disposed in the inlet air duct (112); and
a nozzle assembly (200), the nozzle assembly (200) comprising:
a cowl (210) in fluidic communication with the turbine engine (100), the cowl (210) including a cowl internal surface (216) defining a cowl orifice (218);
a plug (230) defining a primary thrust surface (232), wherein the plug (230) is supported relative to the cowl (210) so that a portion of the primary thrust surface (232) is disposed within the cowl orifice (218), wherein the primary thrust surface (232) of the plug (230) and the cowl internal surface (216) are spaced to define a throat (242); and
an actuator (248) coupled to at least one of the cowl (210) or the plug (230), the actuator (248) configured to generate relative movement between the cowl (210) and the plug (230), thereby to modify the throat (242); and
a coolant system (250) having a source of coolant (252) thermally coupled to the primary thrust surface (232) of the plug (230);
wherein the primary thrust surface (232) is formed by a plug wall (234) having a plug wall interior surface (236) and a plug wall exterior surface (238), wherein the plug wall exterior surface (238) forms the primary thrust surface of the plug (230); and
wherein the plug wall (234) defines perforations (254) extending from the plug wall interior surface (236) to the plug wall exterior surface (238), and the coolant system (250) directs coolant to the plug wall interior surface (236), through the perforations (254), and onto the plug wall exterior surface (238);
wherein the heat exchanger comprises one or more conduits that are in fluidic communication with a heat sink fluid source (144); and
wherein the heat sink fluid source (144) is a power generation system and/or a sub-system that requires heat for operation.

2. The turbine engine of claim 1, wherein the coolant source comprises bypass air (128).

3. The turbine engine of claim 1 or 2, in which:
the plug (230) further comprises a plug base (231) couplable to an airframe (202) of the flight vehicle (102);
the plug base (231) extends around a periphery of the primary thrust surface (232); and
the primary thrust surface (232) comprises a partial-axisymmetric shape.

4. The turbine engine of any of claims 1-3, wherein the perforations (254) have rectilinear profiles.

5. The turbine engine of any of claims 1-3, wherein the perforations (254) have curvilinear profiles.

6. The turbine engine of any of claims 1-3, wherein the perforations (254) have both rectilinear and curvilinear profiles.

7. The turbine engine of any of claims 2-6, wherein the coolant system (250) comprises a coolant regulator configured to adjust a coolant flow rate at which coolant is supplied to the plug (230) from the source of coolant (252).

8. The turbine engine of any of claims 1-7, wherein the plug (230) is stationary and the cowl (210) is moveable relative to the plug (230).

9. The turbine engine of any of claims 1-7, wherein the cowl (210) is stationary and the plug (230) is moveable relative to the cowl (210).

10. The turbine engine of any of claims 1-7, wherein both the cowl (210) and the plug (230) are moveable.

11. A method of providing thrust to a flight vehicle (102) having a turbine engine (100) of any of claims 1 to 10 and an airframe, the method comprising:
generating relative movement between the cowl (210) and the plug (230), thereby to modify the throat (242); and
providing coolant to the plug wall exterior surface (238) to cool the primary thrust surface (232) of the plug (230).

12. The method of claim 11, further comprising controlling a flow rate of the coolant to the plug wall exterior surface (238) so that the coolant is injected into exhaust gas flow (258) from the nozzle assembly (200).

## Patentansprüche

1. Turbinentriebwerk (100) für ein Hochgeschwindigkeitsluftfahrzeug (102), wobei das Turbinentriebwerk (100) Folgendes umfasst:
einen Einlassluftkanal (112) mit einem stromaufwärtigen Ende (114) zum Aufnehmen von Umgebungsluft und einem stromabwärtigen Ende (116), wobei der Einlassluftkanal (112) einen Kanalluftstrom (118) von dem stromaufwärtigen Ende (114) zu dem stromabwärtigen Ende (116) leitet;
ein Gebläse (120), das in dem Einlassluftkanal (112) angeordnet ist;
einen Triebwerkskern (122), der in dem Einlassluftkanal (112) angeordnet und mit dem Gebläse (120) wirkgekoppelt ist, wobei der Triebwerkskern (122) stromabwärts des Gebläses (120) angeordnet ist und ein Kerngehäuse (124) umfasst, durch das ein Kernluftstromteil (126) des Kanalluftstroms (118) strömt;
einen Nachbrenner (130), der in dem Einlassluftkanal (112) und stromabwärts des Triebwerkskerns (122) angeordnet ist; und
einen Wärmetauscher (140), der in dem Einlassluftkanal (112) angeordnet ist; und
eine Düsenanordnung (200), wobei die Düsenanordnung (200) Folgendes umfasst:
eine Verkleidung (210) in Fluidverbindung mit dem Turbinentriebwerk (100), wobei die Verkleidung (210) eine Verkleidungsinnenfläche (216) umfasst, die eine Verkleidungsöffnung (218) definiert;
einen Konus (230), der eine primäre Schubfläche (232) definiert, wobei der Konus (230) relativ zur Verkleidung (210) so gehalten ist, dass ein Teil der primären Schubfläche (232) innerhalb der Verkleidungsöffnung (218) angeordnet ist, wobei die primäre Schubfläche (232) des Konus (230) und die Verkleidungsinnenfläche (216) so beabstandet sind, dass eine Verengung (242) definiert ist; und
einen Aktuator (248), der mit der Verkleidung (210) und/oder dem Konus (230) gekoppelt ist, wobei der Aktuator (248) dazu ausgelegt ist, eine relative Bewegung zwischen der Verkleidung (210) und dem Konus (230) zu erzeugen, wodurch die Verengung (242) modifiziert wird; und
ein Kühlmittelsystem (250) mit einer Kühlmittelquelle (252), die thermisch mit der primären Schubfläche (232) des Konus (230) gekoppelt ist;
wobei die primäre Schubfläche (232) durch eine Konuswand (234) mit einer Konuswandinnenfläche (236) und einer Konuswandaußenfläche (238) gebildet ist, wobei die Konuswandaußenfläche (238) die primäre Schubfläche des Konus (230) bildet; und
wobei die Konuswand (234) Perforationen (254) definiert, die sich von der Konuswandinnenfläche (236) zu der Konuswandaußenfläche (238) erstrecken, und das Kühlmittelsystem (250) Kühlmittel zu der Konuswandinnenfläche (236), durch die Perforationen (254) und auf die Konuswandaußenfläche (238) leitet;
wobei der Wärmetauscher eine oder mehrere Leitungen umfasst, die in Fluidverbindung mit einer Kühlkörperfluidquelle (144) stehen; und
wobei die Kühlkörperfluidquelle (144) ein Leistungserzeugungssystem und/oder ein Subsystem ist, das Wärme für einen Betrieb benötigt.

2. Turbinentriebwerk nach Anspruch 1, wobei die Kühlmittelquelle Nebenstromluft (128) umfasst.

3. Turbinentriebwerk nach Anspruch 1 oder 2, wobei:
der Konus (230) ferner eine Konusbasis (231) umfasst, die mit einem Flugwerk (202) des Luftfahrzeugs (102) koppelbar ist;
sich die Konusbasis (231) um einen Umfang der primären Schubfläche (232) erstreckt; und
die primäre Schubfläche (232) eine teilweise achsensymmetrische Form aufweist.

4. Turbinentriebwerk nach einem der Ansprüche 1-3, wobei die Perforationen (254) geradlinige Profile aufweisen.

5. Turbinentriebwerk nach einem der Ansprüche 1-3, wobei die Perforationen (254) gekrümmte Profile aufweisen.

6. Turbinentriebwerk nach einem der Ansprüche 1-3, wobei die Perforationen (254) sowohl geradlinige als auch gekrümmte Profile aufweisen.

7. Turbinentriebwerk nach einem der Ansprüche 2-6, wobei das Kühlmittelsystem (250) einen Kühlmittelregler umfasst, der dazu ausgelegt ist, eine Kühlmittelströmungsrate einzustellen, mit der Kühlmittel von der Kühlmittelquelle (252) zu dem Konus (230) zugeführt wird.

8. Turbinentriebwerk nach einem der Ansprüche 1-7, wobei der Konus (230) stationär ist und die Verkleidung (210) relativ zu dem Konus (230) beweglich ist.

9. Turbinentriebwerk nach einem der Ansprüche 1-7, wobei die Verkleidung (210) stationär ist und der Konus (230) relativ zu der Verkleidung (210) beweglich ist.

10. Turbinentriebwerk nach einem der Ansprüche 1-7, wobei sowohl die Verkleidung (210) als auch der Konus (230) beweglich sind.

11. Verfahren zum Bereitstellen von Schub zu einem Luftfahrzeug (102) mit einem Turbinentriebwerk (100) nach einem der Ansprüche 1 bis 10 und einem Flugwerk, wobei das Verfahren Folgendes umfasst:
Erzeugen einer relativen Bewegung zwischen der Verkleidung (210) und dem Konus (230), um dadurch die Verengung (242) zu modifizieren; und
Bereitstellen von Kühlmittel zu der Konuswandaußenfläche (238), um die primäre Schubfläche (232) des Konus (230) zu kühlen.

12. Verfahren nach Anspruch 11, ferner umfassend Steuern einer Strömungsrate des Kühlmittels zu der Konuswandaußenfläche (238), so dass das Kühlmittel von der Düsenanordnung (200) in den Abgasstrom (258) eingespritzt wird.

## Revendications

1. Turboréacteur (100) pour un véhicule de vol à grande vitesse (102), le turboréacteur (100) comprenant :
une conduite d'air d'entrée (112) ayant une extrémité amont (114) destinée à recevoir de l'air ambiant et une extrémité aval (116), la conduite d'air d'entrée (112) dirigeant un écoulement d'air de conduite (118) depuis l'extrémité amont (114) jusqu'à l'extrémité aval (116) ;
une soufflante (120) disposée dans la conduite d'air d'entrée (112) ;
un réacteur central (122) disposé dans la conduite d'air d'entrée (112) et couplé fonctionnellement à la soufflante (120), le réacteur central (122) étant disposé en aval de la soufflante (120) et incluant un carter central (124), à travers lequel passe une partie d'écoulement d'air centrale (126) de l'écoulement d'air de conduite (118) ;
une chambre de postcombustion (130) disposée dans la conduite d'air d'entrée (112) et en aval du réacteur central (122) ; et
un échangeur de chaleur (140) disposé dans la conduite d'air d'entrée (112) ; et
un ensemble tuyère (200), l'ensemble tuyère (200) comprenant :
un capot (210) en communication fluidique avec le turboréacteur (100), le capot (210) incluant une surface interne de capot (216) définissant un orifice de capot (218) ;
un tronçon (230) définissant une surface de poussée primaire (232), dans lequel le tronçon (230) est supporté relativement au capot (210) de telle sorte qu'une partie de la surface de poussée primaire (232) est disposée à l'intérieur de l'orifice de capot (218), dans lequel la surface de poussée primaire (232) du tronçon (230) et la surface interne de capot (216) sont espacées pour définir un col (242) ; et
un actionneur (248) couplé au moins à un élément parmi le capot (210) ou le tronçon (230), l'actionneur (248) étant configuré pour générer un mouvement relatif entre le capot (210) et le tronçon (230), pour ainsi modifier le col (242) ; et
un système de refroidisseur (250) ayant une source de refroidisseur (252) couplée thermiquement à la surface de poussée primaire (232) du tronçon (230) ;
dans lequel la surface de poussée primaire (232) est formée par une paroi de tronçon (234) ayant une surface intérieure de paroi de tronçon (236) et une surface extérieure de paroi de tronçon (238), dans lequel la surface extérieure de paroi de tronçon (238) forme la surface de poussée primaire du tronçon (230) ; et
dans lequel la paroi de tronçon (234) définit des perforations (254) s'étendant depuis la surface intérieure de paroi de tronçon (236) jusqu'à la surface extérieure de paroi de tronçon (238), et le système de refroidisseur (250) dirige un refroidisseur jusqu'à la surface intérieure de paroi de tronçon (236), à travers les perforations (254), et jusque sur la surface extérieure de paroi de tronçon (238) ;
dans lequel l'échangeur de chaleur comprend un ou plusieurs conduits qui sont en communication fluidique avec une source de fluide dissipateur de chaleur (144) ; et
dans lequel la source de fluide dissipateur de chaleur (144) est un système de génération d'énergie électrique et/ou un sous-système qui nécessite de la chaleur pour le fonctionnement.

2. Turboréacteur de la revendication 1, dans lequel la source de refroidisseur comprend de l'air de dilution (128).

3. Turboréacteur de la revendication 1 ou 2, dans lequel :
le tronçon (230) comprend en outre une base de tronçon (231) couplable à une cellule (202) du véhicule de vol (102) ;
la base de tronçon (231) s'étend autour d'une périphérie de la surface de poussée primaire (232) ; et
la surface de poussée primaire (232) comprend une forme partiellement axisymétrique.

4. Turboréacteur de quelconques des revendications 1 à 3, dans lequel les perforations (254) ont des profils rectilignes.

5. Turboréacteur de quelconques des revendications 1 à 3, dans lequel les perforations (254) ont des profils curvilignes.

6. Turboréacteur de quelconques des revendications 1 à 3, dans lequel les perforations (254) ont des profils à la fois rectilignes et curvilignes.

7. Turboréacteur de quelconques des revendications 2 à 6, dans lequel le système de refroidisseur (250) comprend un régulateur de refroidisseur configuré pour ajuster un débit d'écoulement de refroidisseur auquel l'alimentation en un refroidisseur est effectuée au tronçon (230) depuis la source de refroidisseur (252).

8. Turboréacteur de quelconques des revendications 1 à 7, dans lequel le tronçon (230) est stationnaire et le capot (210) est mobile relativement au tronçon (230).

9. Turboréacteur de quelconques des revendications 1 à 7, dans lequel le capot (210) est stationnaire et le tronçon (230) est mobile relativement au capot (210).

10. Turboréacteur de quelconques des revendications 1 à 7, dans lequel le capot (210) et le tronçon (230) sont tous les deux mobiles.

11. Procédé pour fournir une poussée à un véhicule de vol (102) ayant un turboréacteur (100) de quelconques des revendications 1 à 10 et une cellule, le procédé comprenant :
la génération de mouvement relatif entre le capot (210) et le tronçon (230), pour ainsi modifier le col (242) ; et
la fourniture de refroidisseur à la surface extérieure de paroi de tronçon (238) pour refroidir la surface de poussée primaire (232) du tronçon (230).

12. Procédé de la revendication 11, comprenant en outre la commande d'un débit d'écoulement du refroidisseur à la surface extérieure de paroi de tronçon (238) de telle sorte que le refroidisseur est injecté dans un écoulement de gaz d'échappement (258) provenant de l'ensemble tuyère (200).
